Europäisches Patentamt

European Patent Office

Office européen des brevets

(19)

(11) EP 0 419 986 B1

(12) EUROPÄISCHE PATENTSCHRIFT

(45) Veröffentlichungstag und Bekanntmachung des Hinweises auf die Patenterteilung:
18.12.1996 Patentblatt 1996/51

(51) Int Cl.⁶: **C08J 3/03**, C08L 83/04

(21) Anmeldenummer: 90117832.7

(22) Anmeldetag: 17.09.1990

(54) **Wässrige Dispersionen von Organopolysiloxanen**

Aqueous dispersions of organopolysiloxanes

Dispersions aqueuses d'organopolysiloxanes

(84) Benannte Vertragsstaaten:
AT BE CH DE ES FR GB IT LI NL SE

(30) Priorität: 26.09.1989 DE 3932025

(43) Veröffentlichungstag der Anmeldung:
03.04.1991 Patentblatt 1991/14

(73) Patentinhaber: WACKER-CHEMIE GMBH
D-81737 München (DE)

(72) Erfinder:
• Braun, Rudolf, Dr.
W-8261 Kastl. (DE)
• Braunsperger, Karl
W-8263 Burghausen (DE)
• Söllradl, Herbert, Dr.
W-8261 Emmerting (DE)
• Wolfgruber, Matthias, Dr.
W-8263 Burghausen (DE)

(56) Entgegenhaltungen:
EP-A- 0 119 093          EP-A- 0 143 541
EP-A- 0 304 719          US-A- 4 221 688
US-A- 4 816 506

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft wäßrige Dispersionen von Organopolysiloxanen, die sich nach Entfernen von Wasser in Elastomere überführen lassen, Verfahren zu deren Herstellung und deren Verwendung.

Maßnahmen zum Umweltschutz zwingen in zunehmendem Maße zur Vermeidung organischer Lösungsmittel in chemischen Zubereitungen. Demzufolge finden immer mehr wäßrige Systeme Verwendung.

Wäßrige Dispersionen von organopolysiloxanen sind an sich vielfach bekannt. Beispielsweise wird in US-PS 4,221,688 (R.D. Johnson, Dow Corning Corporation; ausgegeben am 9. September 1980) die Herstellung von wäßrigen Silicondispersionen auf der Basis von hydroxyliertem Diorganopolysiloxan, kolloidalem Siliciumdioxid und einem organischen Amin oder Natriumhydroxid beschrieben.

Aus US-PS 4,244,849 (J.C. Saam, Dow Corning Corporation; ausgegeben am 13. Januar 1981) sind wäßrige Silicondispersionen bekannt, die durch Zugabe von Alkalisilicat zu einer anionisch stabilisierten wäßrigen Emulsion von Hydroxyendgruppen aufweisendem Polydiorganosiloxan erhalten werden. In EP-A 143 541 beschreibt wäßrige Emulsionen, die u.a. eine gute Haftung auf Substraten zeigen, wobei aus Hydroxysiloxan, Quarz oder Silikat, Katalysator, Emulgator und Wasser eine basische Emulsion hergestellt wird und dieser Emulsion nach einer gewissen Reifezeit ein aminofunktionelles Silan zugesetzt wird.

US-PS 4,816,506 (N. Gamon, Wacker-Chemie GmbH; ausgegeben am 28. März 1989) sind wäßrige Dispersionen dargelegt, die zusätzlich zu in den endständigen Einheiten Hydroxylgruppen aufweisenden Polydiorganosiloxanen und (Organo)metallverbindungen Siliconat enthalten.

Es bestand die Aufgabe, wäßrige Dispersionen von Organopolysiloxanen bereitzustellen, die stabil und ohne lange Lagerung gebrauchsfertig sind und die es erlauben, auf relativ einfache Weise sowie innerhalb kurzer Zeit Elastomere mit unterschiedlichen mechanischen Eigenschaften herzustellen. Diese Aufgabe wird durch die Erfindung gelöst.

Gegenstand der Erfindung sind wäßrige Dispersionen von Organopolysiloxanen, herstellbar unter Verwendung der Ausgangsstoffe

(A) kondensationsfähige Gruppen aufweisendes Organopolysiloxan der Formel (I),
(B) Kondensationskatalysator,
(C) Organopolysiloxanharz und
(D) Diorganosilanolat
und/oder dessen durch Wasserabspaltung entstehenden Kondensationsprodukte.

Die erfindungsgemäß eingesetzten, kondensationsfähige Gruppen aufweisenden Organopolysiloxane (A) sind solche der Formel

$$RO\text{-}[SiR^1_2O]_n\text{-}R \qquad (I),$$

worin
R gleich oder verschieden sein kann und Wasserstoffatom oder Alkylrest mit 1 bis 6 Kohlenstoffatom(en) bedeutet, $R^1$ gleiche oder verschiedene Kohlenwasserstoffreste mit 1 bis 18 Kohlenstoffatom(en), die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind, bedeutet und n eine ganze Zahl von mindestens 200 ist.

Beispiele für Kohlenwasserstoffreste $R^1$ sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste $R^1$ sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt als Reste $R^1$ sind Kohlenwasserstoffreste mit 1 bis 10 Kohlenstoffatom(en), wobei besonders bevorzugt mindestens 80 %, insbesondere mindestens 90 %, der Reste $R^1$ Methylreste sind.

Bevorzugte Reste R sind Wasserstoffatom und Alkylgruppen mit 1 bis 4 Kohlenstoffatom(en), wobei Wasserstoffatom, Methyl- und Ethylreste besonders bevorzugt sind.

Der Durchschnittswert für die Zahl n in Formel (I) ist vorzugsweise so gewählt, daß das Organopolysiloxan der Formel (I) eine Viskosität von mehr als 1 000 mPa·s, insbesondere von mehr als 10 000 mPa·s, jeweils gemessen bei einer Temperatur von 25°C, besitzt.

Obwohl in Formel (I) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R^1_3SiO_{1/2}$-, $R^1SiO_{3/2}$- und $SiO_{4/2}$-Einheiten, ersetzt sein, wobei $R^1$ die vorstehend dafür angegebene Bedeutung hat.

Die polydiorganosiloxane gemäß Formel (I) werden entweder direkt emulgiert oder erst in der Emulsion nach in der Fachwelt bekannten Verfahren, beispielsweise durch Polymerisation bzw. Kondensation niedermolekularer cyclischer bzw. linearer, hydroxy- und/oder alkoxyendblockierter Organopolysiloxane, hergestellt.

Hierzu sei beispielsweise auf US-PS 4,554,187 (W. Grape, Bayer AG; ausgegeben am 19. November 1985) und GB-PS 2 056 473 (R.D. Johnson, Dow Corning Corporation; ausgegeben am 25. Mai 1983) verwiesen.

Bei dem erfindungsgemäß eingesetzten, kondensationsfähige Gruppen aufweisenden Organopolysiloxan (A) kann es sich auch um Polymerbaueinheiten in Siliciumorganischen Copolymeren oder um den Bestandteil einer Mischung mit mindestens einem Organischen Polymeren handeln. Beispiele hierfür sind Mischungen von Organopolysiloxan mit organischen, thermoplastischen Polymeren gemäß US-PS 4,211,729 (K. Marquart, Consortium für elektrochemische Industrie GmbH; ausgegeben am 9. Juli 1980).

Bei dem erfindungsgemäß eingesetzten kondensationsfähige Gruppen aufweisenden Organopolysiloxan (A) kann es sich um eine einzelne Art wie auch um ein Gemisch aus mindestens zwei Arten derartiger kondensationsfähige Gruppen aufweisender Organopolysiloxane handeln.

Bei dem erfindungsgemäß eingesetzten Kondensationskatalysator (B) handelt es sich vorzugsweise um (Organo-) Metallverbindungen, wie beispielsweise die Salze von Carbonsäuren, die Alkoholate und die Halogenide der Metalle Pb, Zn, Zr, Ti, Sb, Fe, Cd, Sn, Ba, Ca und Mn. Besonders bevorzugt sind (Organo-)Zinnverbindungen von Carbonsäuren mit 1 bis 18 Kohlenstoffatom(en) sowie (Organo-)Zinnhalogenide, insbesondere Organozinnoctoate, -naphthenate, -hexoate, -laurate, -acetate, -bromide und -chloride.

Beispiele für solche (Organo-)Zinnverbindungen sind Zinn(II)octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat. Ganz besonders bevorzugt sind Diorganozinndicarboxylate, insbesondere Dibutylzinndilaurat, Dioctylzinndilaurat, Dibutylzinndiacetat und Dioctylzinndiacetat.

Bei dem erfindungsgemäß eingesetzten Kondensationskatalysator (B) kann es sich um eine einzelne Art wie auch um ein Gemisch aus mindestens zwei Arten derartiger Kondensationskatalysatoren handeln.

Die erfindungsgemäßen wäßrigen Dispersionen von Organopolysiloxanen enthalten Kondensationskatalysator (B) in Mengen von vorzugsweise 0,05 bis 7 Gewichtsteile, besonders bevorzugt 0,1 bis 2,0 Gewichtsteile, jeweils bezogen auf 100 Gewichtsteile kondensationsfähige Gruppen aufweisendes Organopolysiloxan (A).

Das erfindungsgemäß eingesetzte Organopolysiloxanharz (C) ist vorzugsweise solches aus Einheiten der allgemeinen Formel

$$R^2_a SiO_{\frac{4-a}{2}} \qquad (II),$$

wobei $R^2$ eine der Bedeutungen wie $R^1$ hat und a eine Zahl mit einem durchschnittlichen Wert zwischen 0,5 und 1,95, insbesondere zwischen 0,8 und 1,8, bedeutet.

Obwohl durch die Formel (II) nicht ausgedrückt, kann das Organopolysiloxanharz bedingt durch seine Herstellung bis zu 10 Gewichtsprozent Si-gebundene Hydroxylgruppen und/oder Alkoxygruppen enthalten.

Bevorzugte Reste $R^2$ in Formel (II) sind Methyl-, Ethyl-, Vinyl- und Phenylreste, insbesondere Methylreste.

Das Molekulargewicht des erfindungsgemäß eingesetzten Organopolysiloxanharzes (C) liegt vorzugsweise über 500, besonders bevorzugt über 2 000.

Das erfindungsgemäß eingesetzte Organopolysiloxanharz (C) kann nach an sich bekannten Verfahren, wie beispielsweise durch Kondensation von niedermolekularen Organopolysiloxanharzen in Dispersion, hergestellt werden, wobei die niedermolekularen Organopolysiloxanharze darstellbar sind durch Solvolyse und Kondensation von einer Lösung der entsprechenden Silane mit Si-gebundenen Chloratomen in einem mit Wasser nicht mischbaren Lösungsmittel mittels eines Alkohol/Wasser-Gemisches. Hierzu sei beispielsweise auf W. Noll, "Chemistry and Technology of Silicones"; Academic Press, Orlando, 1968, Seiten 190 bis 208 verwiesen.

Bei dem erfindungsgemäß eingesetzten Organopolysiloxanharz (C) kann es sich um eine einzelne Art wie auch um ein Gemisch aus mindestens zwei Arten derartiger Organopolysiloxanharze handeln.

Die erfindungsgemäßen wäßrigen Dispersionen von Organopolysiloxanen enthalten Organopolysiloxanharz (C) in Mengen von vorzugsweise 1 bis 100 Gewichtsteilen, besonders bevorzugt 5 bis 35 Gewichtsteilen, jeweils bezogen auf 100 Gewichtsteile kondensationsfähige Gruppen aufweisendes Organopolysiloxan (A).

Das erfindungsgemäß eingesetzte Diorganosilanolat (D) ist vorzugsweise solches der Formel

$$R^3_2Si(OM)_m(OH)_{2-m} \qquad \qquad \text{(III)}$$

und/oder dessen durch Wasserabspaltung entstehenden Kondensationsprodukte,

worin $R^3$ gleich oder verschieden sein kann und eine der Bedeutungen wie $R^1$ hat, M ein Alkalimetallkation, eine Ammonium- oder Phosphoniumgruppe bedeutet und m eine ganze oder gebrochene Zahl im Wert von 0,1 bis 2 ist.

Bevorzugte Reste $R^3$ in Formel (III) sind gegebenenfalls halogenierte oder aminhaltige Kohlenwasserstoffreste mit 1 bis 10 Kohlenstoffatom(en), besonders bevorzugt ein Kohlenwasserstoffrest mit 1 bis 6 Kohlenstoffatom(en) oder ein Aminoalkylrest.

Beispiele für Reste $R^3$ sind die als Beispiele für die Reste $R^1$ oben genannten Reste.

Beispiele für bevorzugte Reste $R^3$ sind die als Beispiele für Kohlenwasserstoffreste $R^1$ oben genannten Reste - mit Ausnahme der Dodecyl-, Octadecyl-, Naphthyl- und Biphenylylreste - sowie halogenierte Reste, wie der 3,3,3-Trifluorpropylrest, Hexafluorpropylreste, der 1-Trifluormethyl-2,2,2-trifluorethylrest, der 2-(Perfluorhexyl)ethylrest, der 3-Chlorpropylrest und aminosubstituierte Reste.

Beispiele für besonders bevorzugte Reste $R^3$ sind Alkylreste, wie der Methyl-, Ethyl-, n-Propyl-, Isopropyl-, n-Butyl-, sec.-Butyl-, t-Butyl-, n-Hexylrest, sowie andere Hexylreste; Alkenylreste, wie der Vinyl- und der Allylrest sowie der Phenylrest, der N-(2-Aminoethyl)-3-aminopropylrest, der 3-Aminopropylrest und der 3-(Cyclohexylamino)propylrest.

Vorzugsweise hat die Zahl m einen Wert von 0,5 bis 2, insbesondere von 1 bis 2.

Beispiele für Reste M sind die Kationen der Alkalimetalle, wie die von Lithium, Natrium, Kalium, Rubidium und Cäsium, sowie Reste der Formel

$$^+NR^4_4 \qquad \qquad \text{(IV)}$$

oder

$$^+PR^4_4 \qquad \qquad \text{(V),}$$

wobei $R^4$ gleich oder verschieden sein kann und Kohlenwasserstoffrest mit 1 bis 6 Kohlenstoffatom(en) bedeutet.

Bevorzugte Reste M sind $Na^+$, $K^+$ und Ammoniumreste gemäß Formel (IV).

Beispiele für das erfindungsgemäß eingesetzte Diorganosilanolat (D) sind die Kaliumsalze des Dimethylsilandiols bzw. des N-(2-Aminoethyl)-3-aminopropylmethylsilandiols.

Bei dem erfindungsgemäß eingesetzten Diorganosilanolat (D) kann es sich um eine einzelne Art wie auch um ein Gemisch aus mindestens zwei Arten derartiger Diorganosilanolate handeln.

Die erfindungsgemäßen wäßrigen Dispersionen von Organopolysiloxanen enthalten Diorganosilanolat (D) in Mengen von vorzugsweise 0,01 bis 10 Gewichtsteilen, besonders bevorzugt 0,15 bis 7 Gewichtsteilen, jeweils bezogen auf 100 Gewichtsteile kondensationsfähige Gruppen aufweisendes Organopolysiloxan (A).

Die erfindungsgemäßen wäßrigen Dispersionen von Organopolysiloxanen werden im allgemeinen durch Emulgatoren Stabilisiert. Es können kationaktive, anionaktive, ampholytische sowie nichtionische Emulgatoren verwendet werden. Diese Emulgatoren sowie deren Dosierung sind dem Fachmann hinreichend bekannt. Es kann eine Art von Emulgator, beispielsweise ein anionaktiver, es können auch Gemische von mindestens zwei Arten von Emulgatoren verwendet werden, beispielsweise ein Gemisch aus mindestens einem anionaktiven mit mindestens einem nichtionischen Emulgator.

Die Emulgatoren können als solche der zu dispergierenden bzw. als Dispersion zu stabilisierenden Mischung zugegeben werden, sie können auch aus einem Vorläufer, beispielsweise der entsprechenden Säure, Base oder eines Salzes des eigentlichen Emulgators in der zu dispergierenden bzw. als Dispersion zu stabilisierenden Mischung durch chemische Reaktion(en) gebildet werden.

Die anionaktiven Emulgatoren sind vorzugsweise die Salze der bei der Emulsionspolymerisation zur Ausbildung des kondensationsfähige Gruppen aufweisenden Organopolysiloxans (A) verwendeten oberflächenaktiven Sulfonsäuren nach US-PS 3,294,725 (D.E. Findley, Dow Corning Corporation; ausgegeben am 27. Dezember 1966), wo die oberflächenaktiven sulfonsäuren und Salze davon angegeben sind. Die Alkali- oder Ammoniumsalze der Sulfonsäuren sind bevorzugt, insbesondere die Kaliumsalze.

Als Beispiele für die Sulfonsäuren seien aliphatische substituierte Benzolsulfonsäuren, aliphatisch substituierte Napthalinsulfonsäuren, aliphatische Sulfonsäuren, Silylalkylsulfonsäuren und aliphatisch substituierte Diphenylethersulfonsäuren genannt.

Des weiteren können als anionische Emulgiermittel auch Alkalisulforizinoleate, sulfonierte Glycerinester von Fettsäuren, Salze von sulfonierten einwertigen Alkoholestern, Amide von Aminosulfonsäuren, wie beispielsweise das Natriumsalz von Oleylmethyltaurid, Alkalisalze von sulfonierten aromatischen Kohlenwasserstoffen, wie Natrium-$\alpha$-naphthalin-monosulfonat, Kondensationsprodukte von Naphthalinsulfonsäuren mit Formaldehyd und Sulfate, wie Ammoniumlaurylsulfat, Triethanolaminlaurylsulfat und Natriumlaurylethersulfat, verwendet werden.

Nichtionische Emulgatoren werden vorzugsweise zusätzlich zu anionaktivem Emulgator verwendet. Beispiele für derartige nichtionische Emulgatoren sind Saponine, Additionsprodukte von Fettsäuren mit Ethylenoxid, wie Dodecansäureester mit Tetraethylenoxid, Additionsprodukte von Ethylenoxid mit Sorbitantrioleat, Additionsprodukte von phenolischen Verbindungen mit Seitenketten mit Ethylenoxid, wie Additionsprodukte von Ethylenoxid mit Isododecylphenol, und Iminderivate, wie polymerisiertes Ethylenimin, Additionsprodukte von Alkoholen mit Ethylenoxid, wie Polyethylenglykol-(10)-isotridecylether.

Beispiele für kationaktive Emulgatoren sind Fettamine, quaternäre Ammoniumverbindungen, quaternäre Verbindungen des Pyridins, Morpholins und Imidazolins.

Beispiele für ampholytische Emulgatoren sind langkettige substituierte Aminosäuren, wie N-Alkyl-di-(aminoethyl)-glycin, N-Alkyl-2-aminopropionat, sowie Betaine, wie (3-Acylaminopropyl)-dimethylglycin und Alkylimidazoliumbetaine.

Die für die Stabilisierung der erfindungsgemäßen wäßrigen Dispersionen von Organopolysiloxanen vorteilhafte Menge an Emulgator ist stark von der Zusammensetzung der jeweiligen Dispersion abhängig. Bezogen auf 100 Gewichtsteile kondensationsfähige Gruppen aufweisendes Organopolysiloxan (A) genügen im allgemeinen 0,5 bis 10 Gewichtsprozent an Emulgator(en).

Obwohl für die Lösung der eingangs gestellten Aufgabe nicht erforderlich, können in den erfindungsgemäßen wäßrigen Dispersionen von organopolysiloxanen zusätzlich Organosilanolate der Formel

$$R^3Si(OM)_r(OH)_{3-r} \qquad\qquad (VI)$$

und/oder deren durch Wasserabspaltung entstehenden Kondensationsprodukte
verwendet werden, wobei $R^3$ und M die obengenannte Bedeutung haben und r eine ganze oder gebrochene Zahl im Wert von 0,1 bis 3, vorzugsweise von 0,5 bis 3, besonders bevorzugt von 1 bis 3, ist.

Die erfindungsgemäßen Dispersionen von Organopolysiloxanen enthalten Organosilanolat gemäß Formel (VI) in Mengen von vorzugsweise 0 bis 10 Gewichtsteilen, besonders bevorzugt 0 bis 4 Gewichtsteilen, jeweils bezogen auf 100 Gewichtsteile kondensationsfähige Gruppen aufweisendes Organopolysiloxan (A).

Ferner können die erfindungsgemäßen wäßrigen Dispersionen von Organopolysiloxanen weitere Komponenten, vorzugsweise ausgewählt aus der Gruppe der Füllstoffe, Haftvermittler, Weichmacher, Schaumverhütungsmittel, Thixotropier- und Dispergiermittel, Pigmente, lösliche Farbstoffe, Fungizide, Riechstoffe sowie der organischen, in Bezug auf die Dispersionen inerten Lösungsmittel, enthalten.

Beispiele für Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder zinkoxide bzw. deren Mischoxide, Bariumsulfat, Calciumcarbonat, Gips, siliciumnitrid, Siliciumcarbid, Bornitrid, Glas- und Kunststoffpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest, sowie Kunststoffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen.

Füllstoffe werden in Mengen von vorzugsweise 0 bis 200 Gewichtsteilen, bezogen auf 100 Gewichtsteile kondensationsfähige Gruppen aufweisendes Organopolysiloxan (A), verwendet.

Beispiele für Haftvermittler, die zur Verbesserung der Haftung der aus den erfindungsgemäßen wäßrigen Dispersionen nach Entfernen ihrer Lösungsmittelanteile erhaltenen elastomeren Produkte auf dem Untergrund, auf dem die erfindungsgemäßen Dispersionen aufgebracht worden sind, zugesetzt werden, sind aminofunktionelle Silane, wie N-(2-Aminoethyl)-3-aminopropyltrialkoxysilane, bei denen der Alkoxyrest ein Methoxy-, Ethoxy-, n-Propoxy- oder Isopropoxyrest ist.

Beispiele für Weichmacher sind bei Raumtemperatur flüssige, durch Trimethylsiloxygruppen endblockierte Dimethylpolysiloxane mit einer Viskosität von mindestens 10 mPa·s.

Beispiele für organische, in Bezug auf die Dispersionen inerte Lösungsmittel sind Kohlenwasserstoffe, wie Petrolether verschiedener Siedebereiche, n-Pentan, n-Hexan, Hexan-Isomerengemisch, Toluol und Xylol.

Beispiele für Thixotropiermittel sind Carboxymethylcellulose und Polyvinylalkohol.

Beispiele für Dispergiermittel sind Polyacrylsäuresalze und Polyphosphate.

Die genannten Thixotropier- und Dispergiermittel haben teilweise auch emulgierende Eigenschaften, so daß sie als Emulgatoren benutzt werden können.

Von jeder der vorstehend als mögliche Komponente für die erfindungsgemäßen wäßrigen Dispersionen genannten Gruppen von Stoffen kann jeweils als eine Komponente ein Stoff dieser Gruppe oder auch ein Gemisch aus mindestens zwei verschiedenen dieser Stoffe verwendet werden.

Die erfindungsgemäßen wäßrigen Dispersionen von Organopolysiloxanen besitzen vorzugsweise pH-Werte von 5 bis 13, besonders bevorzugt von 7 bis 11.

Bei den erfindungsgemäßen wäßrigen Dispersionen von Organopolysiloxanen wurden Feststoffgehalte von über 90 Gewichtsprozent erreicht. Als Feststoffgehalt ist hier der Gewichtsanteil aller Bestandteile der Dispersion außer Wasser und, falls vervendet, organischem Lösungsmittel am Gesamtgewicht der Dispersion zu verstehen. Vorzugsweise haben die erfindungsgemäßen wäßrigen Dispersionen von Organopolysiloxanen Feststoffgehalte von 20 bis 90 Gewichtsprozent, besonders bevorzugt von 40 bis 90 Gewichtsprozent. Niedrigere Feststoffgehalte sind selbstverständlich möglich, jedoch wirtschaftlich wenig sinnvoll.

Die erfindungsgemäßen wäßrigen Dispersionen von Organopolysiloxanen können in der gleichen Weise hergestellt werden, in der auch bisher wäßrige Dispersionen von Organopolysilo xanen hergestellt werden.

Die bevorzugte Arbeitsweise zur Herstellung der erfindungsgemäßen wäßrigen Dispersionen besteht darin, daß

- eine wäßrige Emulsion von kondensationsfähige Gruppen aufweisendem Polyorganosiloxan (A),
- Kondensationskatalysator (B) in Substanz oder in Form einer wäßrigen Dispersion,
- eine wäßrige Dispersion von Organopolysiloxanharz (C),
- Diorganosilanolat (D) und die entsprechenden durch Wasserabspaltung entstehenden Kondensationsprodukte sowie
- gegebenenfalls weitere Stoffe

vermischt werden.

Das Emulgieren bzw. Dispergieren kann in üblichen, zur Herstellung von Emulsionen bzw. Dispersionen geeigneten Mischgeräten, wie beispielsweise schnellaufende Stator-Rotor-Rührgeräte nach Prof. P. Willems, bekannt unter dem registrierten Warenzeichen "Ultra-Turrax" erfolgen. Hierzu sei noch auf Ullmanns Encyklopädie der Technischen Chemie, Urban & Schwarzenberg, München, Berlin, 3. Auflage, Band 1, Seite 720 ff verwiesen.

Gemäß einer besonders bevorzugten Arbeitsweise zur Herstellung der erfindungsgemäßen wäßrigen Dispersionen wird

- eine saure Emulsion von kondensationsfähige Gruppen aufweisendem Organopolysiloxan (A), welche hergestellt wird, indem niedermolekulare cyclische bzw. lineare, hydroxy- und/oder alkoxyendblockierte Organopolysiloxane, wobei solche mit einer Viskosität zwischen 80 und 100 000 mPa·s bevorzugt sind, in Gegenwart von saurem Kondensationskatalysator und Emulgator emulgiert sowie in Emulsion hochkondensiert werden,

mit

- einer basischen Dispersion von Organopolysiloxanharz (C), welche hergestellt wird, indem niedermolekulare Organopolysiloxanharze, wobei solche mit einem Molekulargewicht zwischen 200 und 10 000 bevorzugt sind, in Gegenwart von basischem Kondensationskatalysator und Emulgator dispergiert sowie in Dispersion hochkondensiert werden,

vermischt, wobei jeweils der pH-Wert der Emulsion von (A) bzw. der Dispersion von (C) so gewählt wird, daß die resultierende Mischung neutral ist,

und

- Kondensationskatalysator (B) in Substanz oder in Form einer wäßrigen Dispersion,
- Diorganosilanolat (D) und die entsprechenden durch Wasserabspaltung entstehenden Kondensationsprodukte, vorzugsweise im Gemisch mit Wasser, sowie

- gegebenenfalls weitere Stoffe

zugegeben.

Die erfindungsgemäßen wäßrigen Dispersionen von Organopolysiloxanen können für alle Zwecke eingesetzt werden, für die auch bisher wäßrige Dispersionen von Organopolysiloxanen verwendet werden. Sie können beispielsweise als Dichtungsmassen, Farben, Anstrichsysteme und als elektrisch isolierende bzw. leitende, hydrophobe, klebrige Stoffe abweisende Beschichtungssysteme oder als Grundlage bzw. Zusätze zu solchen Systemen dienen.

Die erfindungsgemäß hergestellten, insbesondere die nach der besonders bevorzugten Ausführungsform des erfindungsgemäßen Verfahrens hergestellten, wäßrigen Dispersionen von Organopolysiloxanen härten schon bei Raumtemperatur innerhalb kurzer Zeit nach Verdampfen des Lösungsmittelsanteils, Wasser und ggf. organische Lösungsmittel, zu Elastomeren aus.

Die mechanischen Eigenschaften der erfindungsgemäß hergestellten, elastomeren Produkte können ganz gezielt und auf relativ einfache Weise, den gestellten Anforderungen entsprechend über den mengenmäßigen Anteil des Diorganosilanolats (D) in der erfindungsgemäßen wäßrigen Dispersion, beispielsweise durch Zugabe unterschiedlicher Mengen von Diorganosilanolat (D) zu einer vorgefertigten, die übrigen Komponenten enthaltenden Grundmasse, eingestellt werden.

Die erfindungsgemäßen wäßrigen Dispersionen haben den weiteren Vorteil, daß sie auf vielen Substraten, wie beispielsweise Papier, Textilien, mineralischen Baustoffen, Kunststoffen, Holz und vielen anderen Unterlagen, festhaftende Überzüge bilden. Das Beschichten kann dabei z.B. durch Streichen, Walzen, Tauchen oder Spritzen erfolgen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25° C. Sofern nicht anders angegeben, wurden die nachstehenden Beispiele bei einem Druck der umgebenden Atmosphäre, also etwa 1000 hPa, und bei Raumtemperatur, also bei etwa 22°C, bzw. bei einer Temperatur, die sich beim Zusammengeben der Reaktanden bei Raumtemperatur ohne zusätzliche Heizung oder Kühlung einstellt, durchgeführt.

Die Elastomereigenschaften werden jeweils nach den folgenden, genormten Prüfungen ermittelt:

**Reißfestigkeit** : **DIN 53504-85S1**

**Reißdehnung** : **DIN 53504-85S1**

**Modul** : **DIN 53504-85S1**

**Shore-A-Härte** : **DIN 53505-87**

**Weiterreißfestigkeit** : **ASTM D624B-73**

**Beispiel 1**

I) Herstellung einer wäßrigen Emulsion von kondensationsfähige Gruppen aufweisendem Organopolysiloxan (A)

Eine aus 1700 g eines $\alpha,\omega$ -Dihydroxydimethylsiloxans mit einer Viskosität von 100 mm$^2$/s, 53,0 g Kaliumdodecylbenzolsulfonat (65 %ig in Wasser), 34,3 g Dodecylbenzolsulfonsäure und 213 g Wasser hergestellte Emulsion wird nach 20 Stunden Lagerung mit Kaliumhydroxyd (44 %ig in Wasser) neutralisiert. Die Viskosität der Ölphase beträgt 1 000 000 mm$^2$/s.

II) Herstellung einer wäßrigen Dispersion von Kondensationskatalysator (B)

50,0 g Dibutylzinndilaurat werden zusammen mit 5,00 g Kaliumdodecylbenzolsulfonat und 45 g Wasser emulgiert.

III) Herstellung einer wäßrigen Dispersion von Organopolysiloxanharz (C)

Eine aus 300 g eines aus Einheiten der Formel

7

$$(CH_3)_{1,2}SiO_{1,4}$$

bestehenden niedermolekularen Organopolysiloxanharzes, 24,0 g Kaliumdodecylbenzolsulfonat (65 %ig in Wasser), 9,00 g Dodecylbenzolsulfonsäure und 267 g Wasser bereitete Dispersion wird nach 36 Stunden Lagerung mit Kaliumhydroxyd (44 %ig in Wasser) neutralisiert. Die Dispersion ist milchig trüb und bildet auf einer Glasplatte nach dem Trocknen einen spröden Film.

IV) Herstellung einer wäßrigen Lösung von Kalium-N-(2-aminoethyl)-3-aminopropylmethylsilanolat

Zu einer Lösung von 63,7 g Kaliumhydroxyd (88 %ig in Wasser) in 200 g Wasser werden unter kräftigem Rühren 103 g N-(2-Aminoethyl)-3-aminopropylmethyldimethoxysilan (käuflich erhältlich unter der Bezeichnung "Silan GF 95" bei der Wacker-Chemie GmbH, München) zudosiert. Von der Mischung werden durch Erhitzen erst Methanol und dann etwa 70 g Wasser abdestilliert. Anschließend wird die Mischung durch Zugabe von Wasser auf 317 g Gesamtgewicht aufgefüllt. Es resultiert eine 40 prozentige Kalium-N-(2-aminoethyl)-3-aminopropylmethylsilanolatlösung.

V) Herstellung einer wäßrigen Lösung von Kalium-N-(2-aminoethyl)-3-aminopropylsilanolat

Zu einer Lösung von 95,5 g Kaliumhydroxyd in 400 g Wasser werden unter kräftigem Rühren 111 g N-(2-Aminoethyl)-3-aminopropyltrimethoxysilan (käuflich erhältlich unter der Bezeichnung "Silan GF 91" bei der Wacker-Chemie GmbH, München) zudosiert. Von der Mischung werden durch Erhitzen erst Methanol und dann etwa 200 g Wasser abdestilliert. Anschließend wird die Mischung durch Zugabe von Wasser auf 367 g Gesamtgewicht aufgefüllt. Es resultiert eine 40 prozentige Kalium-N-(2-aminoethyl)-3-aminopropylsilanolatlösung.

100 g der unter I) beschriebenen Polymeremulsion werden mit 1,00 g der unter II) beschriebenen Katalysatordispersion, 15,0 g der unter III) beschriebenen Harzdispersion und 60,0 g gefällter Kreide zu einer cremigen, standfesten und mindestens 6 Monate lagerfähigen Masse vermischt. In jeweils gleiche Mengen dieser Grundmasse werden nun jeweils unterschiedliche Mengen des unter IV) beschriebenen Kalium-N-(2-aminoethyl)-3-aminopropylmethylsilanolats bzw. Abmischungen mit dem unter V) beschriebenen Kalium-N-(2-aminoethyl)-3-aminopropylsilanolats eingerührt (siehe Tabelle 1).

Tabelle 1

| Versuch | Grundmasse (g) | Diorganosilanolat gemäß IV) in (g) | Organosilanolat gemäß V) in (g) | pH-Wert |
|---------|----------------|-------------------------------------|----------------------------------|---------|
| 1a | 176 | 0,5 | - | 8,5 |
| 1b | 176 | 1,0 | - | 8,5 |
| 1c | 176 | 1,5 | - | 9,0 |
| 1d | 176 | 2,0 | - | 9,0 |
| 1e | 176 | 3,0 | - | 10,0 |
| 1f | 176 | 1,0 | 0,5 | 9,0 |
| 1g | 176 | 1,0 | 1,0 | 10,0 |

Aus den wäßrigen Dispersionen gemäß den Versuchen 1a bis 1g werden 24 Stunden nach ihrer Herstellung 2 mm dicke Filme erzeugt, indem die wäßrigen Dispersionen 1a bis 1g jeweils auf eine Oberfläche aus Polytetrafluorethylen (PTFE) aufgetragen und das Wasser bei Raumtemperatur verdampfen gelassen wird. Zwei Wochen nach dem Auftragen bilden sich trockene, elastische Filme, die auf ihre Elastomereigenschaften hin untersucht werden (siehe Tabelle 2).

Tabelle 2

| Versuch | Reißfestigkeit (N/mm$^2$) | Reißdehnung (%) | Modul[1] (N/mm$^2$) | Shore-A-Härte | Weiterreißfestigkeit (N/mm) |
|---------|----------------------------|------------------|----------------------|----------------|------------------------------|
| 1a | 0,9 | 660 | 0,4 | 23 | 4,6 |
| 1b | 0,9 | 740 | 0,3 | 19 | 4,8 |
| 1c | 1,0 | 750 | 0,3 | 20 | 5,2 |
| 1d | 1,1 | 830 | 0,3 | 21 | 5,3 |

[1] Zugfestigkeit bei 100 % Dehnung

Tabelle 2   (fortgesetzt)

| Versuch | Reißfestigkeit (N/mm²) | Reißdehnung (%) | Modul[1] (N/mm²) | Shore-A-Härte | Weiterreißfestigkeit (N/mm) |
|---|---|---|---|---|---|
| 1e | 0,7 | 400 | 0,3 | 22 | 4,5 |
| 1f | 1,1 | 690 | 0,3 | 21 | 4,7 |
| 1g | 0,7 | 320 | 0,5 | 23 | 5,5 |
| V1a | 0,7 | 650 | 0,3 | 16 | 2,7 |
| V1b | 0,6 | 440 | 0,3 | 19 | 3,7 |
| V1c | 0,4 | 210 | 0,3 | 18 | 3,5 |
| 2 | 1,3 | 720 | 0,5 | 29 | 6,4 |

1) Zugfestigkeit bei 100 % Dehnung

**Vergleichsbeispiel 1**

Die in Beispiel 1 beschriebene Verfahrensweise wird wiederholt mit der Abänderung, daß in jeweils gleiche Mengen Grundmasse kein Silanolat bzw. jeweils verschiedene Mengen des in Beispiel 1 unter V) beschriebenen Kalium-N-(2-aminoethyl)-3-aminopropylsilanolats eingerührt werden (siehe Tabelle 3). Es werden cremige, standfeste und mindestens 6 Monate lagerfähige Massen erhalten.

Tabelle 3

| Versuch | Grundmasse (g) | Diorganosilanolat gemäß IV) in (g) | Organosilanolat gemäß V) in (g) | pH-Wert |
|---|---|---|---|---|
| V1a | 176 | - | - | 9,5[2] |
| V1b | 176 | - | 1,0 | 9,0 |
| V1c | 176 | - | 2,0 | 9,0 |

2) Der pH-Wert wird durch Zugabe von 1 g Kaliumhydroxyd (20 %ig in Wasser) eingestellt.

Aus den wäßrigen Dispersionen gemäß den Versuchen V1a bis V1c werden 24 Stunden nach ihrer Herstellung 2 mm dicke Filme erzeugt, indem die wäßrigen Dispersionen V1a bis V1c jeweils auf eine Oberfläche aus PTFE aufgetragen und das Wasser bei Raumtemperatur verdampfen gelassen wird. Zwei Wochen nach dem Auftragen bilden sich trockene, elastische Filme, die auf ihre Elastomereigenschaften hin untersucht werden. Die Ergebnisse finden sich in Tabelle 2 von Beispiel 1.

**Beispiel 2**

100 g der in Beispiel 1 unter I) beschriebenen Polymeremulsion werden mit 1,00 g der in Beispiel 1 unter II) beschriebenen Katalysatordispersion, 30,0 g der in Beispiel 1 unter III) beschriebenen Harzdispersion und 60,0 g gefällter Kreide zu einer cremigen, standfesten und mindestens 6 Monate lagerfähigen Masse vermischt. In 191 g dieser Grundmasse werden nun 2,0 g des in Beispiel 1 unter IV) beschriebenen Kalium-N-(2-aminoethyl)-3-aminopropylmethylsilanolats eingerührt. Die so hergestellte wäßrige Dispersion hat einen pH-Wert von 9,0.

Aus der so erhaltenen wäßrigen Dispersion wird 24 Stunden nach ihrer Herstellung ein 2 mm dicker Film erzeugt, indem die wäßrige Dispersion auf eine Oberfläche aus PTFE aufgetragen und das Wasser bei Zimmertemperatur verdampfen gelassen wird. Zwei Wochen nach dem Auftragen bildet sich ein trockener, elastischer Film, der auf seine Elastomereigenschaften hin untersucht wird. Die Ergebnisse hierzu finden sich in Tabelle 2 von Beispiel 1.

**Beispiel 3**

VI) Herstellung einer wäßrigen Emulsion von kondensationsfähige Gruppen aufweisendem Organopolysiloxan (A)

Eine aus 850 g eines $\alpha,\omega$-Dihydroxydimethylsiloxans mit einer Viskosität von 80 000 mm²/s, 26,5 g Kaliumdodecylbenzolsulfonat (65 %ig in Wasser), 17,2 g Dodecylbenzolsulfonsäure und 106 g Wasser hergestellte Emulsion wird nach 4 Stunden Lagerung ohne Neutralisation weiterverarbeitet. Die Viskosität der Ölphase beträgt 420 000 mm²/s.

VII) Herstellung einer wäßrigen Dispersion von Organopolysiloxanharz (C)

Eine aus 150 g eines aus Einheiten der Formel

$$(CH_3)_{1,2}SiO_{1,4}$$

bestehenden niedermolekularen Organopolysiloxanharzes, 12,0 g Kaliumdodecylbenzolsulfonat (65 %ig in Wasser), 12,00 g des in Beispiel 1 unter IV) beschriebenen Kalium-N-(2-aminoethyl)-3-aminopropylmethylsilanolats und 138 g Wasser bereitete Dispersion wird nach 6 (80 °C) bzw. 48 Stunden Lagerung ohne vorherige Neutralisation weiterverarbeitet. Unabhängig von der Lagerzeit sind die Dispersionen milchig trüb und bilden auf einer Glasplatte nach dem Trocknen einen spröden Film.

Jeweils 100 g der unter VI) beschriebenen Polymeremulsion werden mit 25,0 g der unter VII) beschriebenen Harzdispersion jeweils unterschiedlicher Lagerzeit gut vermischt, so daß eine neutrale, hochviskose Dispersion entsteht, und mit 0,50 g der in Beispiel 1 unter II) beschriebenen Katalysatordispersion, 1,00 g N-(2-Aminoethyl)-3-aminopropyltrimethoxysilan (käuflich erhältlich unter der Bezeichnung "Silan GF 91" bei der Wacker-Chemie GmbH, München) sowie 70,0 g gefällter Kreide versetzt, wobei eine cremige, standfeste und mindestens 6 Monate lagerfähige Masse entsteht. In jeweils gleiche Mengen dieser Grundmassen werden nun unterschiedliche Mengen des in Beispiel 1 unter IV) beschriebenen Kalium-N-(2-aminoethyl)-3-aminopropylmethylsilanolats eingerührt (siehe Tabelle 4).

Tabelle 4

| Versuch | Grundmasse (g) | Diorganosilanolat gemäß IV) in (g) | Lagerzeit der Harzdispersion gemäß VII) | pH-Wert |
|---------|---------------|-----------------------------------|------------------------------------------|---------|
| 3a | 196,5 | 1,0 | 6 h (80 °C) | 9,0 |
| 3b | 196,5 | 2,0 | 6 h (80 °C) | 9,5 |
| 3c | 196,5 | 1,0 | 48 h | 9,0 |

Aus den wäßrigen Dispersionen gemäß den Versuchen 3a bis 3c werden jeweils 24 Stunden, 4 bzw. 14 Tage nach ihrer Herstellung 2 mm dicke Filme erzeugt, indem die wäßrigen Dispersionen 3a bis 3c jeweils auf eine Oberfläche aus PTFE aufgetragen und das Wasser bei Raumtemperatur verdampfen gelassen wird. Nach den in Tabelle 5 angegebenen Zeiten bilden sich trockene, elastische Filme, die auf ihre Elastomereigenschaften hin untersucht werden (siehe Tabelle 6).

Tabelle 5

| Versuch | Lagerzeit der Dispersionen vor ihrer Anwendung | Zeit bis zur Klebefreiheit des Films |
|---------|-----------------------------------------------|--------------------------------------|
| 3a | 24 Stunden | 120 Minuten |
| 3a | 96 Stunden | 25 Minuten |
| 3a | 336 Stunden | 20 Minuten |
| 3b | 24 Stunden | 80 Minuten |
| 3b | 96 Stunden | 17 Minuten |
| 3b | 336 Stunden | 15 Minuten |
| 3c | 24 Stunden | 120 Minuten |
| 3c | 96 Stunden | 20 Minuten |
| 3c | 336 Stunden | 20 Minuten |
| 4 | 24 Stunden | 1440 Minuten |
| 4 | 96 Stunden | 240 Minuten |
| 4 | 336 Stunden | 40 Minuten |

Tabelle 6

| Versuch | Reißfestigkeit (N/mm$^2$) | Reißdehnung (%) | Modul[1] (N/mm$^2$) | Shore-A-Härte | Weiterreißfestigkeit (N/mm) |
|---|---|---|---|---|---|
| 3a | 0,9 | 1020 | 0,3 | 21 | 5,3 |
| 3b | 0,9 | 700 | 0,4 | 23 | 5,9 |
| 3c | 1,0 | 810 | 0,4 | 22 | 5,5 |
| V2a | 1,0 | 650 | 0,5 | 28 | 6,2 |
| V2b | 1,0 | 410 | 0,5 | 30 | 6,7 |
| V2c | 0,9 | 430 | 0,5 | 31 | 6,6 |
| 4 | 0,9 | 570 | 0,3 | 25 | 4,6 |

1) Zugfestigkeit bei 100 % Dehnung

**Vergleichsbeispiel 2**

VIII) Herstellung einer wäßrigen Dispersion von Organopolysiloxanharz (C)

Die in Beispiel 3 unter VII) beschriebene Arbeitsweise wird wiederholt mit der Abänderung, daß anstatt von 12,00 g des in Beispiel 1 unter IV) beschriebenen Kalium-N-(2-aminoethyl)-3-aminopropylmethylsilanolats 12,00 g des in Beispiel 1 unter V) beschriebenen Kalium-N-(2-aminoethyl)-3-aminopropylsilanolats verwendet wird. Unabhängig von der Lagerzeit sind die Dispersionen milchig trüb und bilden auf einer Glasplatte nach dem Trocknen einen spröden Film.

Jeweils 100 g der in Beispiel 3 unter VI) beschriebenen Polymeremulsion werden mit 25,0 g der unter VIII) beschriebenen Harzdispersion unterschiedlicher Lagerzeit gut vermischt, so daß eine neutrale, hochviskose Dispersion entsteht, und mit 0,50 g der in Beispiel 1 unter II) beschriebenen Katalysatordispersion, 1,00 g N-(2-Aminoethyl)-3-aminopropyltrimethoxysilan (käuflich erhältlich unter der Bezeichnung "Silan GF 91" bei der Wacker-Chemie GmbH, München) sowie 70,0 g gefällter Kreide versetzt, wobei eine cremige, standfeste und mindestens 6 Monate lagerfähige Masse entsteht. In jeweils gleiche Mengen dieser Grundmassen werden nun unterschiedliche Mengen des in Beispiel 1 unter V) beschriebenen Kalium-N-(2-aminoethyl)-3-aminopropylsilanolats eingerührt (siehe Tabelle 7).

Tabelle 7

| Versuch | Grundmasse (g) | Organosilanolat gemäß V) in (g) | Lagerzeit der Harzdispersion gemäß VIII) | pH-Wert |
|---|---|---|---|---|
| V2a | 196,5 | 1,0 | 6 h (80 °C) | 9,0 |
| V2b | 196,5 | 2,0 | 6 h (80 °C) | 9,0 |
| V2c | 196,5 | 1,0 | 48 h | 9,0 |

Mit den wäßrigen Dispersionen gemäß den Versuchen V2a bis V2b wird wie in Beispiel 3 beschrieben verfahren. Die Zeiten bis zur Klebefreiheit können Tabelle 8 und die Elastomereigenschaften Tabelle 6 von Beispiel 3 entnommen werden.

Tabelle 8

| Versuch | Lagerzeit der Dispersionen vor ihrer Anwendung | Zeit bis zur Klebefreiheit des Films |
|---|---|---|
| V2a | 24 Stunden | 90 Minuten |
| V2a | 96 Stunden | 18 Minuten |
| V2a | 336 Stunden | 13 Minuten |
| V2b | 24 Stunden | 60 Minuten |
| V2b | 96 Stunden | 10 Minuten |
| V2b | 336 Stunden | 10 Minuten |
| V2c | 24 Stunden | 100 Minuten |
| V2c | 96 Stunden | 18 Minuten |
| V2c | 336 Stunden | 17 Minuten |

**Beispiel 4**

IX) Herstellung einer wäßrigen Emulsion von kondensationsfähige Gruppen aufweisendem Organopolysiloxan (A)

Die in Beispiel 3 unter VI) beschriebene Arbeitsweise wird wiederholt mit der Abänderung, daß nach vier Stunden Lagerung mit 9,00 g Kalium-N-(2-aminoethyl)-3-aminopropylmethylsilanolat neutralisiert wird. Die Viskosität der Ölphase beträgt 400 000 $mm^2/s$.

X) Herstellung einer wäßrigen Dispersion von Organopolysiloxanharz (C)

Die in Beispiel 3 unter VII) beschriebene Arbeitsweise wird wiederholt mit der Abänderung, daß anstatt von 12,00 g des in Beispiel 1 unter IV) beschriebenen Kalium-N-(2-aminoethyl)-3-aminopropylmethylsilanolats 3,00 g Dodecylbenzolsulfonsäure verwendet und nach 48 Stunden Lagerung mit Kaliumhydroxyd (20 %ig in Wasser) neutralisiert wird. Die Dispersion ist milchig trüb und bildet auf einer Glasplatte nach dem Trocknen einen spröden Film.

100 g der unter IX) beschriebenen Polymeremulsion werden mit 25,0 g der unter X) beschriebenen Harzdispersion gut vermischt und mit 0,50 g der in Beispiel 1 unter II) beschriebenen Katalysatordispersion, 1,00 g N-(2-Aminoethyl)-3-aminopropyltrimethoxysilan (käuflich erhältlich unter der Bezeichnung "Silan GF 91" bei der Wacker-Chemie GmbH, München), 70,0 g gefällter Kreide sowie 1,00 g Kalium-N-(2-aminoethyl)-3-aminopropylmethylsilanolat versetzt, wobei eine cremige, standfeste und mindestens 6 Monate lagerfähige Masse mit einem pH-Wert von 9,0 entsteht.

Mit der so erhaltenen wäßrigen Dispersion wird wie in Beispiel 3 beschrieben verfahren. Die Zeiten bis zur Klebefreiheit können Tabelle 5 von Beispiel 3 und die Elastomereigenschaften Tabelle 6 von Beispiel 3 entnommen werden.

**Patentansprüche**

1. Wäßrige Dispersionen von Organopolysiloxanen, herstellbar unter Verwendung der Ausgangsstoffe

   (A) kondensationsfähige Gruppen aufweisendes Organopolysiloxan, der Formel

$$RO-[SiR^1{}_2O]_n-R \qquad (I),$$

   worin

   R    gleich oder verschieden sein kann und Wasserstoffatom oder Alkylrest mit 1 bis 6 Kohlenstoffatom(en) bedeutet,

   $R^1$   gleiche oder verschiedene Kohlenwasserstoffreste mit 1 bis 18 Kohlenstoffatom(en), die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind, bedeutet und

   n    eine ganze Zahl von mindestens 200 ist,

   mit der Maßgabe, daß in Formel (I) bis zu 10 Molprozent der Diorganosiloxaneinheiten durch andere Siloxaneinheiten, wie $R^1{}_3SiO_{1/2}$-, $R^1SiO_{3/2}$- und $SiO_{4/2}$-Einheiten, ersetzt sein können,

   (B) Kondensationskatalysator,

   (C) Organopolysiloxanharz und

   (D) Diorganosilanolat
   und/oder dessen durch Wasserabspaltung entstehenden Kondensationsprodukte.

2. Wäßrige Dispersionen von Organopolysiloxanen gemäß Anspruch 1, dadurch gekennzeichnet, daß als Kondensationskatalysator (B) (Organo-)Metallverbindung(en) verwendet werden.

3. Wäßrige Dispersionen von Organopolysiloxanen gemäß Anspruch 1 oder 2, dadurch gekennzeichnet, daß als Organopolysiloxanharz (C) solches aus Einheiten der Formel

EP 0 419 986 B1

$$R^2{}_a SiO_{\frac{4-a}{2}} \qquad \text{(II)},$$

wobei $R^2$ gleiche oder verschiedene Kohlenwasserstoffreste mit 1 bis 18 Kohlenstoffatom(en), die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind, und a eine Zahl mit einem durchschnittlichen Wert zwischen 0,5 und 1,95 bedeutet.

4. Wäßrige Dispersionen von Organopolysiloxanen gemäß einem oder mehreren der Ansprüche 1 bis 3, dadurch gekennzeichnet, daß als Diorganosilanolat (D) solches der Formel

$$R^3{}_2 Si(OM)_m(OH)_{2-m} \qquad \text{(III)}$$

und/oder dessen durch Wasserabspaltung entstehenden Kondensationsprodukte,
worin $R^3$ gleiche oder verschiedene Kohlenwasserstoffreste mit 1 bis 18 Kohlenstoffatom(en), die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind, bedeutet, M ein Alkalimetallkation, eine Ammonium- oder Phosphoniumgruppe bedeutet und m eine ganze oder gebrochene Zahl im Wert von 0,1 bis 2 ist,
verwendet wird.

5. Wäßrige Dispersionen von Organopolysiloxanen gemäß einem oder mehreren der Ansprüche 1 bis 4, dadurch gekennzeichnet, daß sie, bezogen auf 100 Gewichtsteile kondensationsfähige Gruppen aufweisendes Organopolysiloxan (A),

    0,05 - 7 Gewichtsteile Kondensationskatalysator (B),
    1 - 100 Gewichtsteile Organopolysiloxanharz (C) und
    0,01 -10 Gewichtsteile Diorganosilanolat (D)

enthalten.

6. Wäßrige Dispersionen von Organopolysiloxanen gemäß einem oder mehreren der Ansprüche 1 bis 5, dadurch gekennzeichnet, daß sie einen pH-Wert zwischen 5 und 13 aufweisen.

7. Wäßrige Dispersionen von Organopolysiloxanen gemäß einem oder mehreren der Ansprüche 1 bis 6, dadurch gekennzeichnet, daß sie einen Feststoffgehalt zwischen 20 und 90 Prozent aufweisen.

8. Verfahren zur Herstellung wäßriger Dispersionen von Organopolysiloxanen gemäß einem oder mehreren der Ansprüche 1 bis 7, dadurch gekennzeichnet, daß

- eine wäßrige Emulsion von kondensationsfähige Gruppen aufweisendem Polyorganosiloxan (A),
- Kondensationskatalysator (B) in Substanz oder in Form einer wäßrigen Dispersion,
- eine wäßrige Dispersion von Organopolysiloxanharz (C),
- Diorganosilanolat (D) und die entsprechenden durch Wasserabspaltung entstehenden Kondensationsprodukte sowie
- gegebenenfalls weitere Stoffe

vermischt werden.

9. Verfahren gemäß Anspruch 8, dadurch gekennzeichnet, daß

- eine saure Emulsion von kondensationsfähige Gruppen aufweisendem Organopolysiloxan (A), welche hergestellt wird, indem niedermolekulare cyclische bzw. lineare hydroxy- und/oder alkoxyendblockierte Organopolysiloxane in Gegenwart von saurem Kondensationskatalysator und Emulgator emulgiert sowie in Emulsion hochkondensiert werden,

mit

- einer basischen Dispersion von Organopolysiloxanharz (C), welche hergestellt wird, indem niedermolekulare Organopolysiloxanharze in Gegenwart von basischem Kondensationskatalysator und Emulgator dispergiert sowie in Dispersion hochkondensiert werden,

vermischt wird, wobei jeweils der pH-Wert der Emulsion von (A) bzw. der Dispersion von (C) so gewählt wird, daß die resultierende Mischung neutral ist, und

- Kondensationskatalysator (B) in Substanz oder in Form einer wäßrigen Dispersion,
- Diorganosilanolat (D) und die entsprechenden durch Wasserabspaltung entstehenden Kondensationsprodukte sowie
- gegebenenfalls weitere Stoffe

zugegeben werden.

## Claims

1. Aqueous dispersions of organopolysiloxanes, which can be prepared using the starting substances

   (A) organopolysiloxane containing groups which can undergo condensation, of the formula

$$RO\text{-}[SiR^1_2O]_n\text{-}R \tag{I}$$

   wherein

   $R$    can be identical or different and denotes a hydrogen atom or alkyl radical having 1 to 6 carbon atom(s),
   $R^1$   denotes identical or different hydrocarbon radicals having 1 to 18 carbon atom(s), which are optionally substituted by halogen atoms, amino groups, ether groups, ester groups, epoxy groups, mercapto groups, cyano groups or (poly)glycol radicals, the latter being built up from oxyethylene and/or oxypropylene units, and
   $n$    is an integer of at least 200,

   with the proviso that in formula (I) up to 10 mol per cent of the diorganosiloxane units can be replaced by other siloxane units, such as $R^1_3SiO_{1/2}\text{-}$, $R^1SiO_{3/2}\text{-}$ and $S_iO_{4/2}\text{-}$ units,
   (B) condensation catalyst,
   (C) organopolysiloxane resin and
   (D) diorganosilanolate and/or condensation products thereof formed by splitting off water.

2. Aqueous dispersions of organopolysiloxanes according to Claim 1, characterized in that (organo)metallic compound(s) are used as the condensation catalyst (B).

3. Aqueous dispersions of organopolysiloxanes according to Claim 1 or 2, characterized in that the organopolysiloxane resin (C) [lacuna] one consisting of units of the formula

$$R^2_aSiO_{\frac{4-a}{2}} \tag{II}$$

   wherein $R^2$ denotes identical or different hydrocarbon radicals having 1 to 18 carbon atom(s), which are optionally substituted by halogen atoms, amino groups, ether groups, ester groups, epoxy groups, mercapto groups, cyano groups or (poly)glycol radicals, the latter being built up from oxyethylene units and/or oxypropylene units, and $a$ denotes a number having an average value between 0.5 and 1.95.

4. Aqueous dispersions of organopolysiloxanes according to one or more of Claims 1 to 3, characterized in that the diorganosilanolate (D) used is one of the formula

$$R^3_2Si(OM)_m(OH)_{2-m} \qquad (III)$$

and/or condensation products thereof formed by splitting off water, wherein $R^3$ denotes identical or different hydrocarbon radicals having 1 to 18 carbon atom(s), which are optionally substituted by halogen atoms, amino groups, ether groups, ester groups, epoxy groups, mercapto groups, cyano groups or (poly)glycol radicals, the latter being built up from oxyethylene units and/or oxypropylene units, M denotes an alkali metal cation or an ammonium or phosphonium group and m is an integer or fraction having a value of 0.1 to 2.

5. Aqueous dispersions of organopolysiloxanes according to one or more of Claims 1 to 4, characterized in that they contain 0.05 - 7 parts by weight of condensation catalyst (B), 1 - 100 parts by weight of organopolysiloxane resin (C) and 0.01 - 10 parts by weight of diorganosilanolate (D) per 100 parts by weight of organopolysiloxane (A) containing groups which can undergo condensation.

6. Aqueous dispersions of organopolysiloxanes according to one or more of Claims 1 to 5, characterized in that they have a pH of between 5 and 13.

7. Aqueous dispersions of organopolysiloxanes according to one or more of Claims 1 to 6, characterized in that they have a solids content of between 20 and 90 per cent.

8. Process for the preparation of aqueous dispersions of organopolysiloxanes according to one or more of Claims 1 to 7, characterized in that

    - an aqueous emulsion of polyorganosiloxane (A) containing groups which can undergo condensation,
    - condensation catalyst (B) in bulk or in the form of an aqueous dispersion,
    - an aqueous dispersion of organopolysiloxane resin (C),
    - diorganosilanolate (D) and the corresponding condensation products formed by splitting off water and
    - if appropriate other substances

    are mixed.

9. Process according to Claim 8, characterized in that

    - an acid emulsion of organopolysiloxane (A) containing groups which can undergo condensation, which is prepared by emulsifying, and subjecting to a high degree of condensation in emulsion, low molecular weight cyclic or linear organopolysiloxanes blocked by hydroxyl and/or alkoxy end groups in the presence of acid condensation catalyst and emulsifier,

    is mixed with

    - a basic dispersion of organopolysiloxane resin (C), which is prepared by dispersing, and subjecting to a high degree of condensation in dispersion, low molecular weight organic polysiloxane resins in the presence of a basic condensation catalyst and emulsifier,

    the pH of the emulsion of (A) and of the dispersion of (C) in each case being chosen so that the resulting mixture is neutral, and

    - condensation catalyst (B), in bulk or in the form of an aqueous dispersion,
    - diorganosilanolate (D) and the corresponding condensation products formed by splitting off water and
    - if appropriate other substances

    are added.

**Revendications**

1. Dispersions aqueuses d'organopolysiloxanes, pouvant être préparées par utilisation des matières premières suivantes

   (A) un organopolysiloxane comportant des groupes capables de condensation, de formule

   $$RO\text{-}[SiR^1{}_2O]_n\text{-}R \qquad (I)$$

   où

   R peut être identique ou différent et représente un atome d'hydrogène ou un radical alcoyle avec 1 à 6 atomes de carbone,
   $R^1$ représente des radicaux hydrocarbure identiques ou différents, avec 1 à 18 atomes de carbone, qui sont facultativement substitués par des atomes d'halogène, des groupes amino, éther, ester, époxy, mercapto, cyano ou des radicaux (poly)glycol, où ces derniers sont édifiés à partir d'unités oxyéthylène et/ou oxypropylène, et
   n est un nombre entier d'au moins 200,

   avec la condition que, dans la formule (I), jusqu'à 10% en moles des unités diorganosiloxane peuvent être remplacés par d'autres unités siloxane, telles que des unités $R^1{}_3SiO_{1/2}$-, $R^1SiO_{3/2}$- et $SiO_{4/2}$-,
   (B) un catalyseur de condensation,
   (C) une résine organopolysiloxanique, et
   (D) un diorganosilanolate et/ou ses produits de condensation formés par élimination d'eau.

2. Dispersions aqueuses d'organopolysiloxanes suivant la revendication 1, caractérisées en ce que, comme catalyseur de condensation (B), on utilise un ou des composés (organe)métalliques.

3. Dispersions aqueuses d'organopolysiloxanes suivant la revendication 1 ou 2, caractérisées en ce que, comme résine organopolysiloxanique (C), on utilise celles constituées d'unités de formule

   $$R^2{}_aSiO_{\frac{4-a}{2}} \qquad (II)$$

   où

   $R^2$ représente des radicaux hydrocarbure identiques ou différents, avec 1 à 18 atomes de carbone, qui sont facultativement substitués par des atomes d'halogène, des groupes amino, éther, ester, époxy, mercapto, cyano ou des radicaux (poly)glycol, où ces derniers sont édifiés à partir d'unités oxyéthylène et/ou oxypropylène, et
   a représente un nombre avec une valeur moyenne comprise entre 0,5 et 1,95.

4. Dispersions aqueuses d'organopolysiloxanes suivant l'une ou plusieurs des revendications 1 à 3, caractérisées en ce que, comme diorganosilanolate (D), on utilise ceux de formule

   $$R^3{}_2Si(OM)_m(OH)_{2\text{-}m} \qquad (III)$$

   et/ou leurs produits de condensation formés par élimination d'eau,
   où

   $R^3$ représente des radicaux hydrocarbure identiques ou différents, avec 1 à 18 atomes de carbone, qui sont facultativement substitués par des atomes d'halogène, des groupes amino, éther, ester, époxy, mercapto, cyano ou des radicaux (poly)glycol, où ces derniers sont édifiés à partir d'unités oxyéthylène et/ou oxypropylène,

M représente un cation métallique alcalin, un groupe ammonium ou phosphonium, et
m représente un nombre entier ou fractionnaire avec une valeur comprise entre 0,1 et 2.

5. Dispersions aqueuses d'organopolysiloxanes suivant l'une ou plusieurs des revendications 1 à 4, caractérisées en ce qu'elles contiennent, sur base de 100 parties en poids de l'organopolysiloxane (A) comportant des groupes capables de condensation,

0,05 à 7 parties en poids du catalyseur de condensation (B),
1 à 100 parties en poids de la résine organopolysiloxanique (C), et
0,01 à 10 parties en poids du diorganosilanolate (D).

6. Dispersions aqueuses d'organopolysiloxanes suivant l'une ou plusieurs des revendications 1 à 5, caractérisées en ce qu'elles présentent un pH compris entre 5 et 13.

7. Dispersions aqueuses d'organopolysiloxanes suivant l'une ou plusieurs des revendications 1 à 6, caractérisées en ce qu'elles présentent une teneur en matière solide comprise entre 20 et 90%.

8. Procédé de préparation des dispersions aqueuses d'organopolysiloxanes suivant l'une ou plusieurs des revendications 1 à 7, caractérisées en ce que

- une émulsion aqueuse du polyorganosiloxane (A) comportant des groupes capables de condensation,
- le catalyseur de condensation (B) comme tel ou sous forme d'une dispersion aqueuse,
- une dispersion aqueuse de la résine organopolysiloxanique (C),
- le diorganosilanolate (D) et les produits de condensation correspondants formés par élimination d'eau, ainsi que
- facultativement d'autres matières

sont mélangés.

9. Procédé suivant la revendication 8, caractérisé en ce que

- une émulsion acide du polyorganosiloxane (A) comportant des groupes capables de condensation, lequel est préparé par émulsification d'organopolysiloxanes inférieurs, cycliques et respectivement, linéaires, à hydroxy et/ou alcoxy terminaux bloqués, en présence d'un catalyseur de condensation acide et d'un émulsionnant, ainsi que par condensation en émulsion,
  est mélangée avec

- une dispersion basique de la résine organopolysiloxanique (C), laquelle est préparée par dispersion de résines organopolysiloxaniques inférieures en présence d'un catalyseur de condensation basique et d'un émulsionnant, ainsi que par condensation en dispersion,

où l'on choisit chaque fois le pH de l'émulsion de (A) et respectivement, de la dispersion de (C), de sorte que le mélange résultant soit neutre,
et l'on ajoute

- le catalyseur de condensation (B) tel quel ou sous forme d'une dispersion aqueuse,
- le diorganosilanolate (D) et les produits de condensation correspondants formés par élimination d'eau, ainsi que
- facultativement d'autres matières.